# EUROPEAN PATENT SPECIFICATION

(11) **EP 3 488 950 B1**
(45) Date of publication and mention of the grant of the patent: **04.10.2023**
(21) Application number: 18208662.9
(22) Date of filing: 27.11.2018
(51) Int. Cl.: B22F 1/00, C22C 14/00, B22F 10/34, B33Y 40/10, B22F 1/14, B22F 3/105, B22F 3/22, B22F 3/14, B33Y 70/00, B22F 10/28

(54) **METHOD AND APPARATUS FOR IMPROVING POWDER FLOWABILITY**
VERFAHREN UND VORRICHTUNG ZUR VERBESSERUNG DER PULVERFLIESSFÄHIGKEIT
PROCÉDÉ ET APPAREIL POUR AMÉLIORER L'APTITUDE À L'ÉCOULEMENT DE POUDRE

(30) Priority: 27.11.2017 US 201715822443
(43) Date of publication of application: 29.05.2019
(73) Proprietor: Hamilton Sundstrand Corporation, Charlotte, NC 28217-4578 (US)
(72) Inventor: MCGEE, Randolph Carlton, Hamden, CT Connecticut 06518 (US); SHE, Ying, East Hartford, CT Connecticut 06118 (US); NARDI, Aaron T., East Granby, CT Connecticut 06026 (US)
(74) Representative: Dehns

(56) References cited:
- EP-A1- 3 241 633
- WO-A1-2013/090895
- WO-A1-2016/118551
- US-A1- 2016 144 427

## Description

### BACKGROUND

Powders are used for a wide variety of applications, including additive manufacturing, conventional powder metallurgy, plasma spraying, rapid prototyping, pharmaceutical processing, etc. Some processes involve the transfer, blending, feeding, and/or fluidization of powders require the powders to flow.

An example powder material is titanium and titanium alloy powders. Titanium and titanium alloy powders are used in, for example, selective laser melting (SLS), metal powder injection molding (PIM), and hot pressed sintering processes for aircraft, automotive, medical, and other applications. WO 2016/118551 A1 relates to a method of applying a metal comprising titanium to a substrate. US 2016/144427 A1 relates to heat treatment of powders used in additive manufacturing.

### SUMMARY

The present invention concerns a method for providing a powder according to claim 1.

In a further method according to any of the foregoing method, the contacting results in an increase in flowability of the powder of about ten (10) percent or greater.

### BRIEF DESCRIPTION OF THE DRAWINGS

Figure 1 schematically illustrates a fluidized bed reactor.
Figure 2 shows results from X-ray photoelectron spectroscopy (XPS) analysis of Ti-6Al-4V powder nitrided at 700 degrees C (1292 degrees F) for 10, 20, and 30 minutes with pure nitrogen (N₂).
Figure 3 shows results from X-ray photoelectron spectroscopy (XPS) analysis of Ti-6Al-4V powder nitrided at 800 degrees C (1472 degrees F) for 1, 5, and 30 minutes with pure nitrogen (N₂).
Figure 4 shows XRD diffraction peaks for the untreated Ti-6Al-4V powder and for samples nitrided at 700 degrees C (1292 degrees F) for 10, 20, and 30 minutes.
Figure 5 shows XRD diffraction peaks for the untreated Ti-6Al-4V powder and for samples nitrided at 800 degrees C (1472 degrees F) for 1, 5, and 30 minutes.
Figure 6 shows scanning electron microscope images for Ti-6Al-4V untreated and nitrided at 700 degrees C (1292 degrees F) for 30 minutes.

### DETAILED DESCRIPTION

Powders for additive manufacturing, conventional powder metallurgy, plasma spraying, rapid prototyping, pharmaceutical processing, etc. are used for aircraft, automotive, medical, and other applications. One example powder is titanium and titanium alloy powders. Titanium and titanium alloy powders are used in, for example, selective laser melting (SLS), metal powder injection molding (PIM), and hot pressed sintering processes, and other processes.

Certain properties of powders affect their behavior during these processes, which in turn affect the final product quality and process efficiency. One such property is flowability, or ability of the powder to flow. Properties that affect a powder's floawbility include moisture content, particle size and shape, particle surface roughness, particle size distribution, the surface state of the particles, temperature, and storage time. In particular, hygroscopic powders, those that tend to absorb/adsorb moisture content from the air, can have increased moisture content which in turn reduces flowability. Titanium and titanium alloy powders are hygroscopic.

Reducing the moisture content of powders improves their flowability, which improves final product quality, including the mechanical properties of the final product, and process efficiency. For example, for automated processes, improved flowability facilitates the efficient movement of particles without causing interruptions. This is because moisture content increases particle cohesion, or the tendency of particles to stick to one another. Decreasing moisture content decreases particle cohesion, and allows the powder to flow more easily.

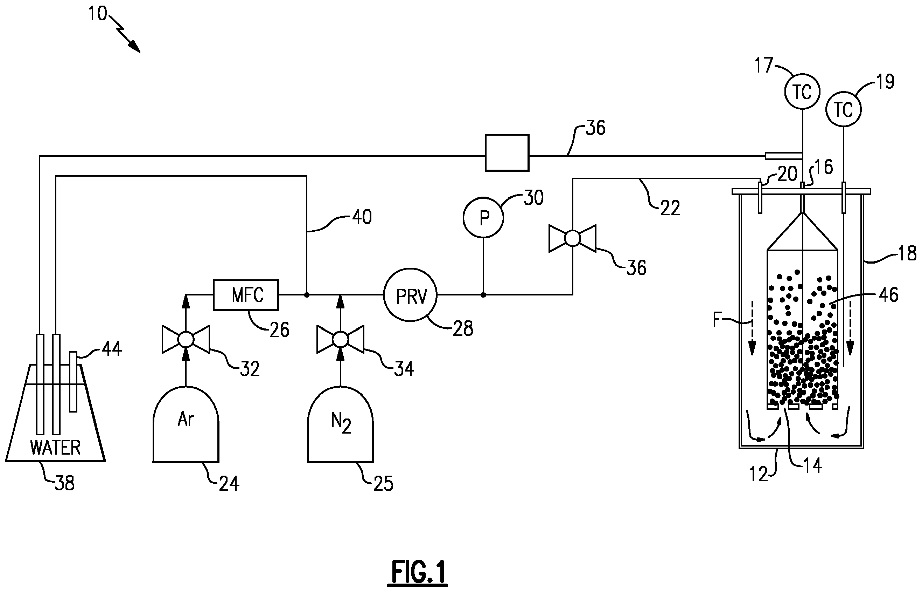

Particle cohesions is affected by the manner in which water molecules are bonded to or interact with particle surfaces and the amount of water bonded to or interacting with particle surfaces, as discussed above. Nitriding particles (increasing surface nitrogen content of the particles) interrupts water interaction with the particles, leading to increased flowability. In one example, nitriding is accomplished in a fluidized bed reactor system 10, schematically illustrated in Figure 1.

An example fluidized bed reactor system 10 includes a fluidized bed reactor 12 having inlet openings 14 disposed at one end of the reactor 12 and an outlet opening 16 disposed at the opposite end of the reactor 12. The fluidized bed reactor 12 is disposed inside of an outer tubing 18, with outlet 16 extending to the outside of outer tubing 18. During operation, the fluidized bed assembly is disposed in a furnace (not shown) to provide heat. Thermocouples 17 and 19 are disposed to monitor temperature in the reactor 12 and outer tubing 18, respectively. An inlet 20 is connected to a gas feed line 22. One or more gas sources 24, 25 such as a storage tank or a gas-generating reactor are connected to gas feed line 22 to supply a gas feed to the fluidized bed reactor 12. Other components, such as mass flow controller 26, pressure regulating valve 28, pressure sensor 30, and shut-off valves 32, 34, and 36 are also disposed in the gas feed line 22 for monitoring and controlling the flow rate and pressure of the gas delivered to the reactor 12. Reactor outlet 16 is connected to outlet line 36, which is connected to a water or other liquid bubbler 38. A bleed line 40 also connects feed line 22 to the bubbler 38, which is vented to atmosphere through exhaust port 44.

In operation, gases from gas sources 24, 25 are fed through feed line 22, with the flow rate and gas pressure controlled by mass flow controller 26 and pressure regulating valve 28. The gases include nitrogen. In one example, gas source 24 is a nitrogen-containing gas source and includes either nitrogen gas (N₂) or blends of one or more of H₂, N₂, and NH₃. Gas source 25 is an inert gas source and includes an inert gas such as Argon (Ar).

The gases enter the outer tubing 18 through inlet 20. The gas is heated as it passes through the space between fluidized bed reactor 12 and outer tubing 18 to enter the fluidized bed reactor 12 through inlet 14. In one example, the reactor 12 is at between about 350 and 950 degrees C (662 and 1742 degrees F). The fluidized bed reactor 12 has particles 46 comprising titanium disposed therein, and the upward gas flow rate through the reactor applies sufficient upward force to the particles 46 to counteract the force of gravity acting on the particles so that they are suspended in a fluid configuration in the reactor space. The gas flow is generally maintained below levels that would carry entrained particles out of the reactor 16 through outlet 16, and outlet 16 can also be fitted with a filter or screen to further assist in keeping metal powder particles 46 from exiting the reactor 12. Gas exits the reactor 12 through outlet 16 and flows via outlet line 36 to the bubbler 38, from which it is exhausted to the atmosphere through exhaust port 44. Gas flow is controlled to provide a residence time, or time the gas and particles are in contact in the reactor 12, of between about 30 and 300 minutes.

The particles 46 are titanium or titanium alloy particles, such as any of the grades of titanium alloys specified in ASTM B861-10. Alpha titanium alloys, near-alpha titanium alloys, alpha-beta titanium alloys, and beta titanium alloys. In some embodiments, the titanium alloy comprises from 0 to 10 wt.% aluminum and from 0 to 10 wt.% vanadium. In some embodiments, the titanium alloy is an alpha-beta titanium alloy such as Ti-6A1-4V (e.g., grades 5 or 23 according to ASTM B861-10), Ti-Al-Sn, Ti-Al-V-Sn, Ti-Al-Mo, Ti-Al-Nb, Ti-V-Fe-Al, Ti-SAl-lMo-lV, Ti-6Al-2Sn-4Zr-2Mo, α+β Ti-6A1-4V or near β Ti-10V-2Fe-3Al. In some embodiments, the titanium alloy is a Ti-6A1-4V alloy such as grade 5 or grade 23 according to ASTM B861-10.

For powders containing metallic particles 46 such as the titanium or titanium alloy particles discussed above, the majority of cohesive forces that affect powder flowability are polar forces. The polar forces are due to the presence of surface hydroxyl groups (i.e., oxygen-containing groups) and physisorbed water molecules at the metal oxide layer typically found in most metal surfaces. Replacing these surface hydroxyl groups with hydrophobic (water-repelling) nitride-containing groups decreases polar forces and thus particle cohesion, and increase flowability. This replacement, called "nitriding," occurs as the particles 46 interact with nitrogen-containing gas from the nitrogen-containing gas source 24 in the fluidized bed reactor 12, as discussed above. The process is relatively inexpensive, fast, and does not require the use of hazardous materials.

Due to the improved flowability of powder 46, the powder 46 is more easily transferred through blenders, bins, drums, hoppers, and other process equipment. Furthermore, the powder 46 can be stored for longer times because the risk of caking due to moisture is reduced. Separation of sample powder cuts from the bulk powder 46 is also facilitated, as are blending, mixing, and compaction processes.

In one example, the flowability of powder 46 is increased by about ten (10) percent or greater. Flowability of the powder can be characterized a number of ways. Angle of repose measurement is one such technique that has been revived to meet industrial need for a rapid, reproducible method for measuring flowability of powders used for transport and storage processes. The Hall and Gustavsson flowmeter techniques can also be used. The Hall flowmeter method is an accepted and standard procedure widely used for characterising the flow of dry powders. The Hall flow meter measurement is provided in units of time (s) required for a 50 g powder sample to flow through a standard cone and nozzle. The major advantage of using the Hall flowmeter is simplicity rather than precision. The Hall flowmeter, however has been reported to not be as effective for non-free flowing powders. Thus, the Gustavsson flowmeter is often used to measure flowability for finer powders which are typically more difficult to dispense. The Gustavsson flowmeter identified by ISO 13517:2013, is also a method for determining the flow rate of metallic powders by means of a calibrated funnel but better suited for finer powders. Overall, using the Hall and Gustavsson flowmeters can be applied in a fast production setting and does not require extensive training.

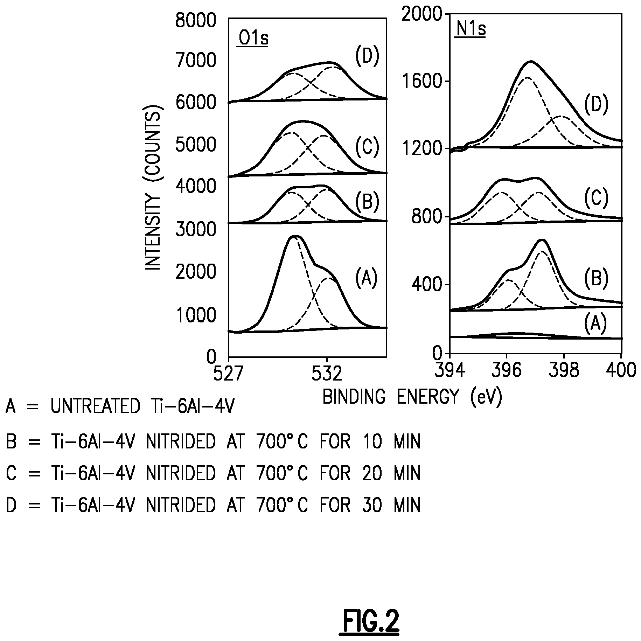

In one example, Ti-6Al-4V powder 46 was nitrided by the process discussed above at 700 degrees C (1292 degrees F) for 30 minutes with pure nitrogen (N₂) gas from nitrogen gas source 24. Results from X-ray photoelectron spectroscopy (XPS) analysis are shown in Figure 2. As shown by the N1s spectra, there was no nitrogen present at the surface of the untreated Ti-6Al-4V powder 46, while the O1s spectra shows the presence of two distinct oxygen species. The data indicates that the near surface of the processed Ti-6Al-4V powder 46 chemically reacted with nitrogen to form TiN at the expense of the TiO2 observed on the surface of the unprocessed powder as indicated by the introduction of N1s peaks with increasing nitriding time. It is generally accepted that the N1s peaks at ~397.2 eV and ~395.8 eV are due to the nitride species associated with TiN. The data shows a relatively higher content of the nitrogen species at ~397.2 eV following 10 minutes of nitriding at 700 degrees C (1292 degrees F) while after treatment for 20 minutes, the concentration of the nitrogen species at -397.1 eV and ~395.8 eV were essentially equal. Finally, there was significantly higher amount of the nitride species at ~397.9 eV and ~396.6 eV. Charge potential model theory suggests that chemical shift on binding energy is impacted by the charge changes on the corresponding atoms. Thus, as the surface nitriding time increases, the increase in overall nitrogen concentration as well as the slight shift to higher binding energies indicates the increase of contribution from the ionic component during the transition of Ti to TiN molecules by the following mechanistic pathway: alpha-Ti to (N)-Ti to Ti₂N to TiN.

These results were observed in parallel with the relative decrease of overall surface oxygen content as also indicated in Figure 2. The O1s spectra shown in Figure 2 indicate that as the overall oxygen content (and thus hydroxyl group content) of the surface decreased, there was also a decrease in the amount of "oxide" oxygen associated with TiO₂ (binding energy -530 eV) relative to the surface oxygen typically associated with oxygen present in organic species (binding energy -532 eV). This confirms the removal/displacement of oxide species by nitrogen with increasing soak time at 700 degrees C (1292 degrees F). The important conclusion to draw from the XPS data is that the relative amount of surface nitrogen following nitridation at 700 degrees C (1292 degrees F) increased with increasing soak time and was highest for the longest soak period (30 minutes).

Table 1 shows the elemental analysis survey results for the Ti-6Al-4V following surface nitriding along with Ti/O and N/O atomic ratios for Ti-6Al-4V treated at 700 degrees C (1292 degrees F) for 10, 20, and 30 minutes. The data show that the gas-phase nitriding treatment resulted in an increase in the surface Ti/O atomic ratio from 0.32 to 0.81 for the untreated sample and the sample nitrided for 30 minutes, respectively. Similarly, the N/O atomic ratio at the surface also increased from 0.02 for the untreated sample to 0.56 for the sample which was nitrided at 700 degrees C (1292 degrees F) for 30 minutes. This quantitatively shows the significant displacement of oxygen by nitride species incorporated at the powder surface. This drastic decrease in surface oxygen could be critical in the prevention of moisture at surface hydroxyl species and lead to better flowability properties.

**Table 1**

| Elements | Untreated | Nitrided (10 min) | Nitrided (20 min) | Nitrided (30 min) |
|---|---|---|---|---|
| Carbon | 30.5 | 35.1 | 34.5 | 26.9 |
| Oxygen | 47.2 | 28.8 | 33.5 | 28.3 |
| Titanium | 14.9 | 19.1 | 16.4 | 23.0 |
| Nitrogen | 0.9 | 11.9 | 8.7 | 15.8 |
| Aluminium | 6.2 | 4.9 | 6.6 | 5.8 |
| Vanadium | 0.3 | 0.3 | 0.2 | 0.2 |
| Ti/O | 0.32 | 0.66 | 0.49 | 0.81 |
| N/O | 0.02 | 0.41 | 0.26 | 0.5 6 |

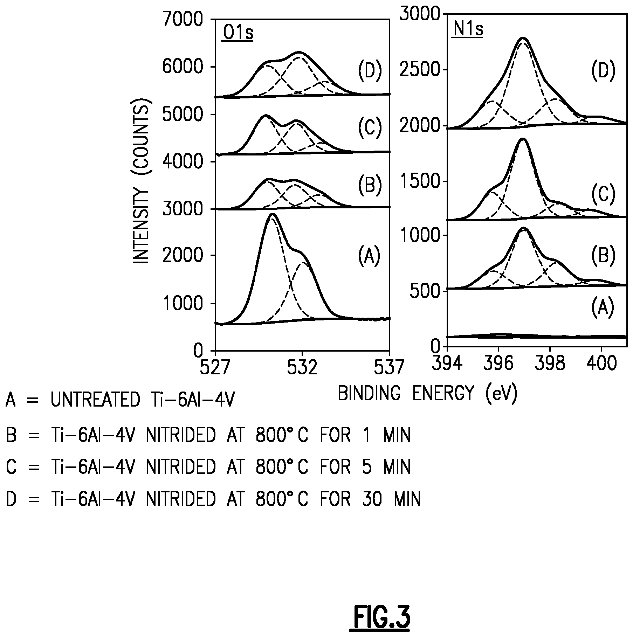

In another example, Ti-6Al-4V powder 46 was nitride by the process discussed above at 800 degrees C (1472 degrees F) for 1, 5, and 30 minutes with pure nitrogen (N₂) gas from nitrogen-containing gas source 24. The N1s and O1s XPS spectra for the powders following nitridation at 800 degrees C (1472 degrees F) are shown in Figure 3. The data reveals binding energy trends with temperature and time across the elements. Similar to the aforementioned results in Figure 2, while there was no indication of nitrogen at the untreated surface, the appearance of significant N1s peaks following nitriding at 800 degrees C (1472 degrees F) was observed. The N1s spectra in Figure 3 shows the increase in nitrogen species indicated by spectral peaks at binding energy values of 395.6 eV, 396.8 eV, 398.44 eV, and 399.8 eV. The peak areas increased with increasing soak time and the N1s peak area at 396.8 eV was significantly higher than the others. The peak at 396.8 eV indicates the presence of "nitride" nitrogen species. The significant increase in peak area also validates the proposed mechanistic pathway of - alpha-Ti to (N)-Ti to Ti₂N to TiN for surface nitriding of Ti-6Al-4V. For the 1 minute exposure time, the Ti peak associated with TiN is slightly shifted to lower binding energies as compared to the samples which were nitrided at 5 and 30 minutes. It is likely that the lower binding energy Ti is non-stoichiometric TiNx with x < 1.

The data also shows that surface nitrogen content increased with a corresponding decrease in oxygen as nitriding soak time at 800 degrees C (1472 degrees F) increased. The O1s spectra for the untreated Ti-6Al-4V powder showed peaks at 530.1 eV and 532.2 eV which correspond to oxide and organic oxygen species and carbonyl oxygen, respectively. As nitriding at 800 degrees C (1472 degrees F) was carried out, a significant decrease in peak area was observed for these O1s peaks along with the introduction of another peak at 533.2 eV which corresponds to additional organic oxygen at the surface. As the overall oxygen content decreased, the ratio between the "oxide" oxygen and "surface" organic oxygen species decreased as well. This indicates that more rapid displacement and thermal decomposition of surface oxides occurred at the higher nitriding temperature.

Table 2 shows the elemental analysis survey results for the Ti-6Al-4V following surface nitriding along with Ti/O and N/O atomic ratios for Ti-6Al-4V treated at 800 degrees C (1472 degrees F) for 1, 5, and 30 minutes.

**Table 2**

| Elements | Untreated | Nitrided (1 min) | Nitrided (5 min) | Nitrided (30 min) |
|---|---|---|---|---|
| Carbon | 30.5 | 24.7 | 25.3 | 23.8 |
| Oxygen | 47.2 | 26.8 | 25.5 | 26.2 |
| Titanium | 14.9 | 25.0 | 26.1 | 24.0 |
| Nitrogen | 0.9 | 18.7 | 18.6 | 20.0 |
| Aluminum | 6.2 | 4.1 | 3.8 | 5.5 |
| Vanadium | 0.3 | 0.8 | 0.6 | 0.5 |
| Ti/O | 0.32 | 0.93 | 1.02 | 0.92 |
| N/O | 0.02 | 0.70 | 0.73 | 0.76 |

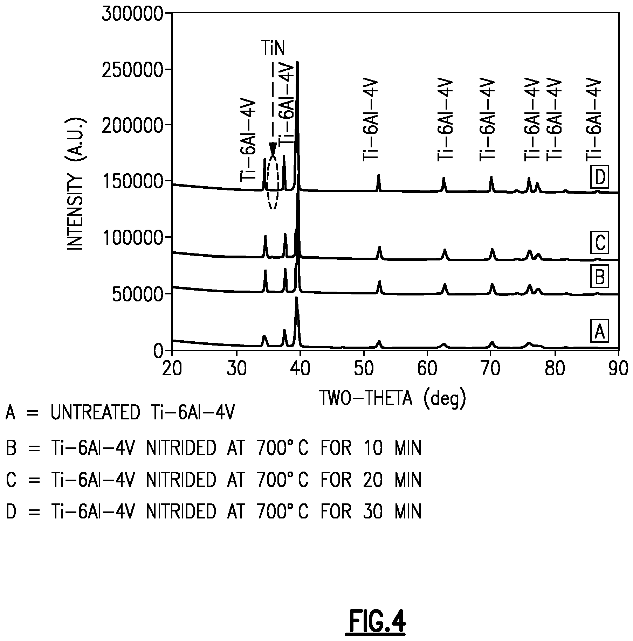

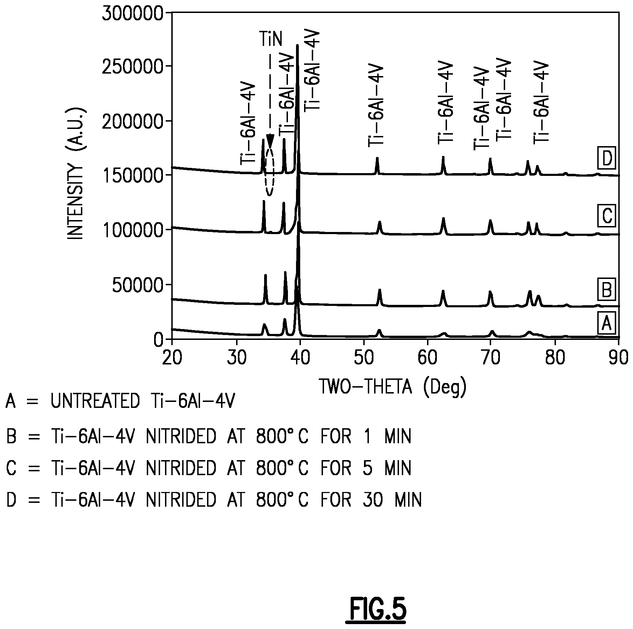

The changes in nitrogen and oxygen content following fluidized bed nitriding were primarily surface modifications and did not alter the bulk structure of Ti-6Al-4V as indicated by x-ray diffraction (XRD) patterns shown in Figures 4 and 5. XRD diffraction peaks for the untreated Ti-6Al-4V powder and for samples nitrided at 700 degrees C (1292 degrees F) for 10, 20, and 30 minutes are shown in Figure 4. XRD diffraction peaks for the untreated Ti-6Al-4V powder and for samples nitrided at 800 degrees C (1472 degrees F) for 1, 5, and 30 minutes are shown in Figure 5. The results show that characteristic alpha-Ti-6Al-4V peaks are present in each case. The peaks at 2-theta values of -34.5, -37.5, and -37.5 for the sample nitrided for 30 minutes were sharper and of higher intensity as compared to the untreated powder and the samples which were nitrided for shorter periods. This indicates that longer nitriding time resulted in larger more crystalline particles. Additionally, the untreated powder was characterized by a broad convoluted peak at -34.5 which is most likely due to the presence of amorphous material which was gradually removed from the samples with increasing treatment time.

With continuing reference to Figure 4, treatment of Ti-6Al-4V at 700 degrees C (1292 degrees F) in pure nitrogen gas at the hold times in this study did not result in significant formation of the bulk nitride species TiN. This is evidenced by the negligible peak at the TiN characteristic 2-theta value of -35.5. The formation of bulk titanium nitride was notably low as indicated by the absence of a significant TiN peak for the sample which was treated for 30 minutes. Similar results were also observed for the Ti-6Al-4V powder following nitriding at 800 degrees C (1472 degrees F) (see Figure 5).

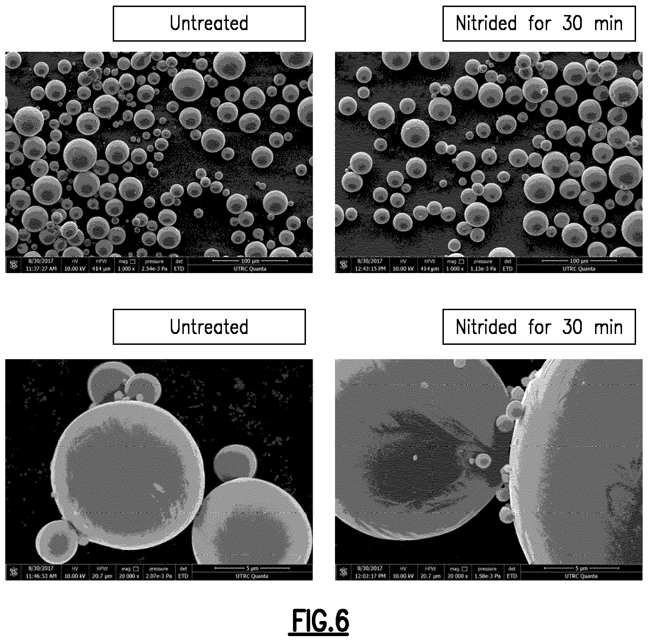

Lastly, the morphology of the Ti-6Al-4V alloy powder 46 was similar to that of the commercial grade material and did not change significantly following nitridation. A representative case revealing this is shown by the scanning electron microscope images for the Ti-6Al-4V powder following nitriding at 700 degrees C (1292 degrees F) for 30 minutes (see Figure 6). The fact that the powder surface can be modified to improve flowability yet not modify the powder morphology is especially important for manufacturers of highly spherical powders who could use the process to improve flowability without affecting product quality.

Furthermore, the foregoing description shall be interpreted as illustrative and not in any limiting sense. For these reasons, the following claims should be studied to determine the scope of this invention.

## Claims

1. A method for providing a powder, comprising:
contacting a powder (46) comprising metallic particles with a nitrogen-containing gas, whereby the contacting results in improvement in flowability of the powder due to replacement of oxygen-containing groups on surfaces of the metallic particles with nitrogen-containing groups; and
utilizing the powder for at least one of selective laser melting, SLM, metal powder injection molding (PIM), and hot pressed sintering;
wherein the powder is a titanium or titanium alloy powder;
wherein the nitrogen-containing gas is pure nitrogen or wherein the nitrogen-containing gas includes one or more of H₂, N₂, and NH₃; and
wherein the contacting occurs in a fluidized bed reactor (12);
wherein the contacting occurs at between 350 and 950 degrees C (662 and 1742 degrees F); and
wherein the contacting occurs for between 30 and 300 minutes.

2. The method of claim 1, wherein the contacting results in an increase in flowability of the powder of about ten (10) percent or greater.

## Patentansprüche

1. Verfahren zum Bereitstellen eines Pulvers, umfassend:
Kontaktieren eines Pulvers (46), das Metallpartikel umfasst, mit einem stickstoffhaltigen Gas, wobei das Kontaktieren mit stickstoffhaltigen Gruppen zu einer Verbesserung der Fließfähigkeit des Pulvers aufgrund des Ersatzes sauerstoffhaltiger Gruppen auf Oberflächen der Metallpartikel führt; und
Verwenden des Pulvers für mindestens eines von selektivem Laserschmelzen, SLM, Metallpulverspritzgießen (PIM) und Heißpresssintern;
wobei das Pulver ein Titan- oder Titanlegierungspulver ist;
wobei das stickstoffhaltige Gas reiner Stickstoff ist oder wobei das stickstoffhaltige Gas eines oder mehrere von H₂, N₂ und NH₃ beinhaltet; und
wobei das Kontaktieren in einem Wirbelschichtreaktor (12) erfolgt;
wobei das Kontaktieren zwischen 350 und 950 Grad C (662 und 1742 Grad F) erfolgt; und
wobei das Kontaktieren zwischen 30 und 300 Minuten erfolgt.

2. Verfahren nach Anspruch 1, wobei das Kontaktieren zu einer Erhöhung der Fließfähigkeit des Pulvers um etwa zehn (10) Prozent oder mehr führt.

## Revendications

1. Procédé de fourniture d'une poudre, comprenant :
la mise en contact d'une poudre (46) comprenant des particules métalliques avec un gaz contenant de l'azote, la mise en contact entraînant une amélioration de la fluidité de la poudre en raison du remplacement des groupes contenant de l'oxygène sur les surfaces des particules métalliques par des groupes contenant de l'azote ; et
l'utilisation de la poudre pour l'au moins un parmi la fusion sélective par laser (SLM) le moulage par injection de poudre métallique (PIM) et le frittage par pressage à chaud ;
dans lequel la poudre est une poudre de titane ou d'alliage de titane ;
dans lequel le gaz contenant de l'azote est de l'azote pur ou dans lequel le gaz contenant de l'azote comprend un ou plusieurs de H₂, N₂ et NH₃ ; et
dans lequel la mise en contact se produit dans un réacteur à lit fluidisé (12) ;
dans lequel la mise en contact se produit entre 350 et 950 degrés Celsius (662 et 1742 degrés Farenheit) ; et
dans lequel la mise en contact se produit pendant entre 30 et 300 minutes.

2. Procédé selon la revendication 1, dans lequel la mise en contact entraîne une augmentation de la fluidité de la poudre d'environ dix (10) pour cent ou plus.
